(19) Europäisches Patentamt / European Patent Office / Office européen des brevets

(11) EP 3 657 441 A1

(12) EUROPEAN PATENT APPLICATION

(43) Date of publication:
27.05.2020 Bulletin 2020/22

(51) Int Cl.:
G06T 7/73 (2017.01)    G06T 7/223 (2017.01)

(21) Application number: 18208198.4

(22) Date of filing: 26.11.2018

| | |
|---|---|
| (84) Designated Contracting States:<br>AL AT BE BG CH CY CZ DE DK EE ES FI FR GB GR HR HU IE IS IT LI LT LU LV MC MK MT NL NO PL PT RO RS SE SI SK SM TR<br>Designated Extension States:<br>BA ME<br>Designated Validation States:<br>KH MA MD TN<br><br>(71) Applicant: Connaught Electronics Ltd.<br>Tuam, County Galway (IE) | (72) Inventors:<br>• CHAH, Ehsan<br>Tuam, County Galway, - (IE)<br>• KURUBA, Naveen<br>Tuam, County Galway (IE)<br><br>(74) Representative: Jauregui Urbahn, Kristian<br>Valeo Schalter und Sensoren GmbH<br>CDA-IP<br>Laiernstraße 12<br>74321 Bietigheim-Bissingen (DE) |

(54) **METHOD FOR DETERMINING A MOUNTING HEIGHT OF A CAMERA BY DETERMINING A MOTION VECTOR, COMPUTER PROGRAM PRODUCT, ELECTRONIC COMPUTING DEVICE, AS WELL AS CAMERA**

(57) The invention relates to a method for determining a mounting height of a camera (5) on a motor vehicle relative to a road surface, on which the motor vehicle is positioned, in which method by means of the camera (5) a first image (8) of the road surface is captured at a first point in time (t1) and a second image (9) of the road surface is captured at a second point in time (t2), which is different from the first point in time (t1), wherein the first image (8) is compared with the second image (9) by means of an electronic computing device (10) and on the basis of the comparison a motion vector (11) for the camera (5) is determined by means of the electronic computing device (10) and by evaluating the determined motion vector (11) and a predetermined velocity (V) of the motor vehicle the mounting height (dh) of the camera (5) is determined by means of the electronic computing device (10). Further the invention relates to a computer program product, an electronic computing device (10) as well as a camera (5).

Fig.2

EP 3 657 441 A1

## Description

The invention relates to a method for determining a mounting height of a camera on a motor vehicle relative to a road surface, on which the motor vehicle is positioned. In the method by means of the camera a first image of the road surface is captured at a first point in time and a second image of the road surface is captured at a second point in time, which is different from the first point in time. Further, the invention relates to a computer program product, an electronic computing device as well as a camera.

In this connection for instance the US 2016/0253566 A1 describes a corresponding method. A first homography, which is created from two images of a roadway, is decomposed to determine an ego-motion, and the ego-motion is used to adjust a previous estimate of a road plane. The adjusted previous estimate of the road plane is combined with the current estimate of the plane to generate a second homography, and the second homography is used to determine the residual motion and a vertical deviation in the surface of the roadway. In some embodiments, multiple road profiles each corresponding to a common portion of a roadway are adjusted in slope and offset by optimizing a function having a data term, a smoothness term and a regularization term. The adjusted road profiles are combined into a multi-frame road profile. In some embodiments, street profile information for a predetermined number of data points is transmitted in periodic data bursts, with more than one data point per data burst.

A disadvantage of the prior art is that, whilst a height of an obstacle on the road can be correspondingly determined, however, due to deviations in the mounting height of the camera equally incorrect estimates can occur, which remain unconsidered in the prior art.

It is the object of the present invention to provide a method, a computer program product, an electronic computing device as well as a camera, by means of which a mounting height of a camera on the motor vehicle can be reliably determined.

This object is solved by a method, a computer program product, an electronic computing device, as well as a camera according to the independent claims.

One aspect of the invention relates to a method for determining a mounting height of a camera on a motor vehicle relative to a road surface, on which the motor vehicle is positioned, in which method by means of a camera a first image of the road surface is captured at a first point in time and a second image of the road surface is captured at a second point in time that is different from the first point in time.

It is envisaged that the first image is compared with the second image by means of an electronic computing device and on the basis of the comparison a motion vector for the camera is determined by means of the electronic computing device and by evaluating the determined motion vector and a predetermined velocity of the motor vehicle the mounting height of the camera is determined by means of the electronic computing device.

By comparison of the first image with the second image thus the motion vector between the first image and the second image can be determined. In dependence on a then predetermined velocity, which for instance can be predetermined by a velocity device of the motor vehicle, then in turn this motion vector can be evaluated in dependence on the predetermined velocity. Thereby a determination of the mounting height of the motor vehicle is facilitated. Thereby the mounting height of the camera on the motor vehicle can be reliably determined.

The camera can for instance be arranged on a tail portion of a motor vehicle and can be used for determining a movement of a hooked-up trailer on the motor vehicle. For instance by means of the camera it may be envisaged that a inclination angle or a coupling angle (jack knife) between the motor vehicle and the hooked-up trailer can be determined. In particular due to the fact that the accuracy of the determination of the inclination angle depends on the accuracy of the measurement of the camera, it is thus of decisive significance that the camera reliably knows its own position in order to be able to determine the inclination angle. For this purpose it is in particular envisaged that for instance a rotation angle of the camera is already known. In particular for the camera already intrinsic and extrinsic parameters are known so that reliably the first image and the second image can be compared with each other.

Alternatively, the camera can also be arranged in different places on the motor vehicle, for instance in the front area or in a lateral area. In particular the camera is orientated in such a way that the road surface can be captured at least in portions by means of the camera. In particular it may be envisaged that the road surface can be predetermined as planar road surface.

The electronic computing device for this purpose can for instance be a part of a camera, however, can also for instance be assigned to an associated driver assistance system. Preferably, the electronic computing device is configured as part of the camera so that the determination of the mounting height can already be effected so that the information of the mounting height can be forwarded merely to further driver assistance systems.

Preferably, it may be envisaged that the predetermined velocity signal is generated and predetermined for instance by means of a global navigation system (Global Navigation Satellite System - GNSS). In this connection in particular in dependence on the current position by means of the navigation device a current velocity and then the electronic computing device can be provided for processing.

According to an advantageous embodiment the velocity is transmitted by means of a velocity capturing device of the motor vehicle to the electronic computing device. For instance the motor vehicle can comprise a tachometer, wherein then by means of the tachometer an electrical velocity signal can be generated and this electrical velocity signal in turn can then be provided as predetermined velocity to the electronic computing device. By means of this predetermined velocity signal then in turn the mounting height can be reliably be determined by way of comparison with the determined motion vector. Thereby a simple and precise determination of the mounting height of the camera relative to the road surface is facilitated.

It is equally advantageous, if a time difference between the capturing of the first image and the second image is determined in dependence on the predetermined velocity. In other words it can be envisaged that for instance in order to be able to determine a precise motion vector, at lower velocities a larger time difference between the first image and the second image is awaited so that reliably the movement within the images can be evaluated, in order to also detect smaller movements. At higher velocities the movement can correspondingly be detected more reliably within a smaller time difference so that with a smaller time difference more frequently per time unit the motion vector can be determined. In particular it can be regarded as time difference if with the camera a plurality of images per second is taken so that then a respective temporal image distance can be assumed as time difference. It can for instance be envisaged that every fifth image or every sixth image is compared with each other. Thus for instance it can be envisaged that of a captured time series the first image is compared with a sixth image and the seventh image with a twelve image. In particular by the dependence on the velocity thus the motion vector and thereby the mounting height of the camera can reliably be determined. For instance it can be envisaged that every fifth image or every sixth image can be compared with each other. Thus, it can for instance be envisaged that of a captured time series the first image is compared with a sixth image and the seventh image with a twelfth image. In particular by the dependence on the velocity thus the motion vector and thereby the mounting height of the camera can reliably be determined.

It has further turned out to be advantageous if by means of the camera 30 images per second are taken and at a velocity of the motor vehicle of more than 18 kilometers per hour (km/h), every second, in particular every third image of the 30 images are compared with each other and at a velocity of the motor vehicle of less than 18 kilometers per hour every fifth, in particular every sixth image of the 30 images are compared with each other. In particular it is thus facilitated that by means of a camera that is already known from the motor vehicle series production, which in particular can take 30 images per second, the method can be performed. In the case of a number of 30 images per second about every 33.33 milliseconds an image is taken. If now the motor vehicle moves at more than 18 kilometers per hour, every second, in particular every third image of the 30 images is compared with each other. Thus in particular in short time intervals the respective motion vector can be determined so that reliably and temporally highly accurately the mounting height of the camera can be determined. In particular at velocities of less than 18 kilometers per hour merely every fifth, in particular every sixth image, of the 30 images is compared with each other. In particular it can thus be realized that the motion vector is determined over an extended time distance but by way of reliable movement determination, whereby the motion vector can be reliably determined. Thus also at small velocities the corresponding movement of the motor vehicle and the corresponding motion vector can be determined. This also at a smaller velocity of the motor vehicle leads to a reliable determination of the motion vector, whereby the mounting height of the camera relative to the road surface can be precisely and reliably determined.

It has further turned out to be advantageous if the camera is provided as fish-eye camera and at least the first image and the second image are captured as fish-eye image. By using the fish-eye camera as camera a large field of view (FOV) can be provided. Thus by means of a single camera large areas of the environment of the motor vehicle can be captured. In particular it is thereby facilitated that by means of the one single camera for instance the road surface and for instance a trailer hooked up to the motor vehicle can be captured. Thereby it is facilitated by one single camera to both provide information for a driver assistance system and to be able to determine the corresponding mounting height of the motor vehicle. Thus, the motor vehicle can be made available with a reduced number of components.

Further, it has turned out to be advantageous if before determining of the motion vector a fish-eye correction of the first image and the second image for comparing the first image and the second image is performed. In particular in the case of using fish-eye cameras a distorted image of the environment is taken. In particular the vertical lines in this connection are shown in a distorted way. In particular by the fisheye correction these vertical lines in turn can be rectified so that a determining of the movement of the motor vehicle within the two images can be performed in an improved way. Thereby an improved comparison between the first image and the second image is facilitated, whereby the motion vector can be determined in a more precise way. This in turn leads to an improved determination of the mounting height of the camera on the motor vehicle.

In a further advantageous embodiment for determining the motion vector a plurality of motion subvectors are generated by way of comparison of the first image with the second image and by evaluation of the plurality of the motion subvectors, in particular by an averaging of the determined motion subvectors, the motion subvector is determined. In particular the term plurality should be taken as referring to more than two motion subvectors. In other words, by the comparison of the first image with the second image a plurality of motion subvectors are generated and then evaluated to render the motion vector. For instance then by the corresponding averaging from the plurality of the motion subvectors the motion vector can be determined. In particular thereby certain "outliers" of the motion subvectors can be compensated for by way of the averaging so that the motion vector can be determined in an improved and reliable way. Thus a precise determining of the mounting height is facilitated.

It is equally advantageous if an expected value range for the plurality of the motion subvectors is predetermined, in which the motion subvectors in dependence on the predetermined velocity or in dependence on a determined adjacent motion subvector of the electronic computing device are expected and a determined motion subvector, which is outside the expected value range, remains unconsidered in the determination of the motion vector. In other words by the electronic calculating device an expected value range is generated, in which it is expected by the electronic computing device that the motion subvector is positioned. Thus these are corresponding threshold values for the expected value range. If the determined motion subvector is within this expected value range, it is used for evaluation of the motion vector. Should this motion subvector be outside this expected value range, it remains unconsidered in the evaluation of the motion vector. Thereby it is facilitated that "outliers" of the motion subvectors, which for instance were generated due to an incorrect optical capturing, do not adversely affect the determining of the movement vector.

In particular it may for instance be envisaged that this is performed in dependence on the predetermined velocity. Should for instance an unexpected motion subvector, which is outside the expected range for this velocity, same can remain unconsidered. Further, it is envisaged that by the adjacent motion subvector, which in the image is next to the motion subvector, a range is predetermined. It may for instance be envisaged that a value for the adjacent motion subvector is captured and is generated as expected value range plus/minus 25 percent around this adjacent motion subvector as expected value range for the motion subvector. In particular this can be performed with the plurality of adjacent motion subvectors. In particular if then in turn the current determined motion subvector should lie outside the expected value range, this is referred to as "outlier" and is not considered. In particular for this purpose for instance a nonlinear method for determining the "outlier" can be used. Thereby a precise determining of the motion vector is facilitated.

In particular it can be envisaged that motion subvectors can be evaluated with regard to a vector length, which for instance is dependent on the velocity, but also with regard to the orientation of the motion subvectors and can be characterized as outliers.

In a further advantageous embodiment the mounting height is determined by means of a gradient method or by means of a Levenberg-Marquardt optimization method of the electronic computing device. The gradient method has in particular the advantage that it can reliably solve general optimization problems. In particular therein an approximate value is assumed. From same one progresses towards the negative gradient until there is no numeric improvement achieved anymore. The gradient method often converges very slowly since it approaches the optimum in a heavy zig-zag course. For this solution of symmetrically positively defined linear equation systems the method of the conjugated gradients here offers an immense improvement. The gradient decline is related to the hill-climbing algorithm. The Levenberg-Marquardt method is a numeric optimization algorithm for solving non-linear compensation problems with the aid of the least square method. The method in particular combines the Gauss-Newton method with a regularization technique, which enforces decreasing function values. The Levenberg-Marquardt algorithm is clearly more robust than the Gauss-Newton method, i. e. it is highly likely to converge also under bad starting conditions. Thereby it is facilitated that in particular by means of two numeric optimization methods the mounting height can be reliably determined.

It has moreover turned out to be advantageous if the mounting height of the camera additionally is determined in dependence on a predetermined relative height of the camera. The relative height of the camera is in particular a probable predetermined mounting height of the camera. For instance as predetermined relative height can be regarded the height of a tail sill, in which the camera is positioned. On the basis of for instance different tire pressures and different loading states in turn the mounting height can differ from the relative height. In particular thus merely the difference between the predetermined relative height and the actual mounting height can be determined. This difference in turn can then be taken into consideration for the use for a driver assistance system.

According to a further advantageous embodiment by means of a triangulation the mounting height dh of the camera is determined in dependence on the predetermined relative height of camera. In particular triangulation can be performed by means of the formula:

$$dh = \left(\left(\frac{mvLen_{hat}}{mvLen_{bma}}\right) - 1\right) * h$$

wherein mvLen_bma corresponds to the length of the motion vector, which is determined by the electronic computing device, and mvLen_hat corresponds to the expected motion vector length for the current velocity, which is predetermined by the model, and h corresponds to the predetermined relative height. Thereby a easy determination of the mounting height of the camera is facilitated.

Further it has turned out to be advantageous if the motion vector is determined by comparing a region of interest in the first image and in the second image. In particular in the first image and in the second image merely the roadway surface can be found in a predetermined area of the first image and the second image. In particular by predetermining the region of interest it is thus rendered possible that not the entire first image and the entire second image are compared with each other, but merely the respective regions of interest in the first image and in the second image. Thereby, for instance it is facilitated that computing capacity is saved, since not the entire first image is compared with the entire second image, but merely the regions of interest.

Preferably it can be envisaged that within the region of interest several predetermined pixels exist, which in turn are compared with each other. Thus, it is facilitated that within the region of interest further not every single pixel of the first image is compared with the other pixel of the second image, but merely predetermined pixels within the respective region of interest. Thereby further computing capacity can be saved since merely a fraction of the complete number of pixels of the first image is compared with the second image. Thereby it is facilitated that the mounting height of the camera can be determined whilst computing capacity is saved.

Further preferably a block evaluation within the regions of interest can be performed. The respective region of interest for this purpose can be segmented into a plurality of blocks, wherein again the blocks of the first image are compared with the blocks of the second image in order to be able to determine the motion vector. Thereby further computing capacity can be saved since merely a fraction of the first image, namely the corresponding blocks, are compared with the blocks of the second image. Thereby it is facilitated that the mounting height of the camera can be determined whilst saving computing capacity.

A further aspect of the invention relates to a computer program product with program code means, which are stored in a computer-readable medium, in order perform the method according to the preceding aspect, if the computer program product is executed on a processor of the electronic computing device. In particular the computer program product is executed on the electronic computing device.

Yet a further aspect of the invention relates to an electronic computing device comprising a computer program product, wherein the electronic computing device for performing the method is configured according to the preceding aspect. In particular the method is performed by means of the electronic computing device.

Yet another aspect of the invention relates to a camera with an electronic computing device according to the preceding aspect. The camera is in particular configured as fish-eye camera.

Advantageous embodiments of the method are to be regarded as advantageous embodiments of the computer program product, the electronic computing device, as well as the camera. The electronic computing device as well as the camera for this purpose have device features, which allow a performance of the method or an advantageous embodiment thereof.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations or alone without departing from the scope of the invention. Thus, implementations are also to be considered as encompassed and disclosed by the invention, which are not explicitly shown in the figures and explained, but arise from and can be generated by the separated feature combinations from the explained implementations. Implementations and feature combinations are also to be considered as disclosed, which thus do not comprise all of the features of an originally formulated independent claim.

The invention is now explained in more detail on the basis of preferred embodiments as well as by reference to the enclosed drawings.

These show in:

Fig. 1     a schematic top view of a motor vehicle with a hooked-up trailer and an embodiment of a camera;

Fig. 2     a schematic block diagram of an embodiment of an electronic computing device; and

Fig. 3     a schematic velocity motion vector diagram.

In the figures identical and functionally identical elements are equipped with the same reference signs.

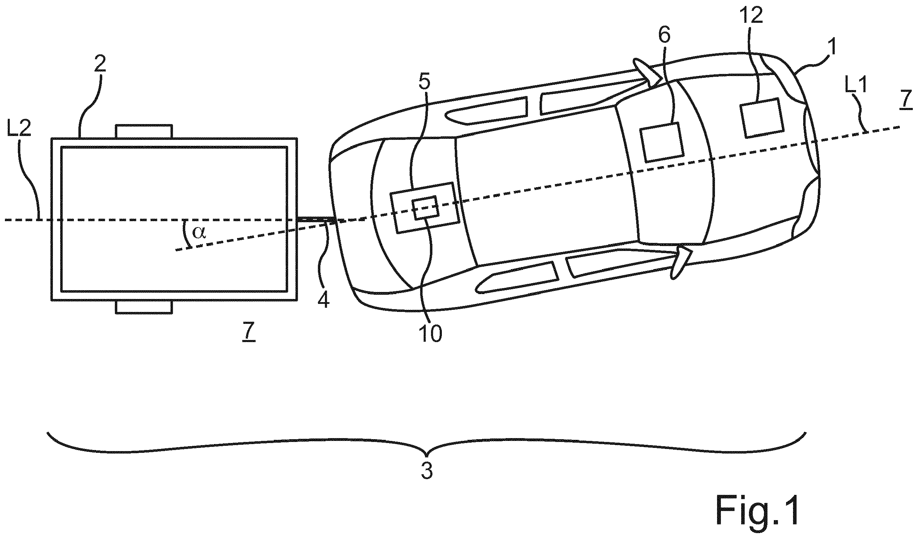

Fig. 1 in a schematic top view shows a motor vehicle 1 comprising a hooked-up trailer 2, which in the coupled state forms a car trailer combination 3. The motor vehicle 1 is configured in particular as passenger car. The motor vehicle 1 in the present example acts as traction unit of the combination 3. It is equally possible that the motor vehicle 1 for instance is also configured as truck or camper van.

The motor vehicle 1 has a longitudinal axis L1. The trailer 2 has a longitudinal axis L2. The trailer 2 is coupled via a trailer coupling 4 to the motor vehicle 1. The motor vehicle 1 comprises a camera 5, by means of which in the present embodiment the trailer 2 can be captured. The camera 5 thus faces in particular the trailer 2 in the present embodiment. Alternatively it is possible that the camera 5 for instance is also arranged in a front region of the motor vehicle 1 and is configured for capturing the front area of the motor vehicle 1. Further areas of arranging the camera 5 on the motor vehicle 1 are equally possible. The present embodiment merely serves for illustration of the inventive idea and by no means should be regarded as final.

It may for instance be envisaged that the camera 5 is configured as part of a driver assistance system 6 of the motor vehicle 1 and for capturing a inclination angle $\alpha$ or a coupling angle between the longitudinal axis L1 and the longitudinal axis L2. In particular by means of the camera 5 a road surface 7, on which the motor vehicle 1 is present, can be captured.

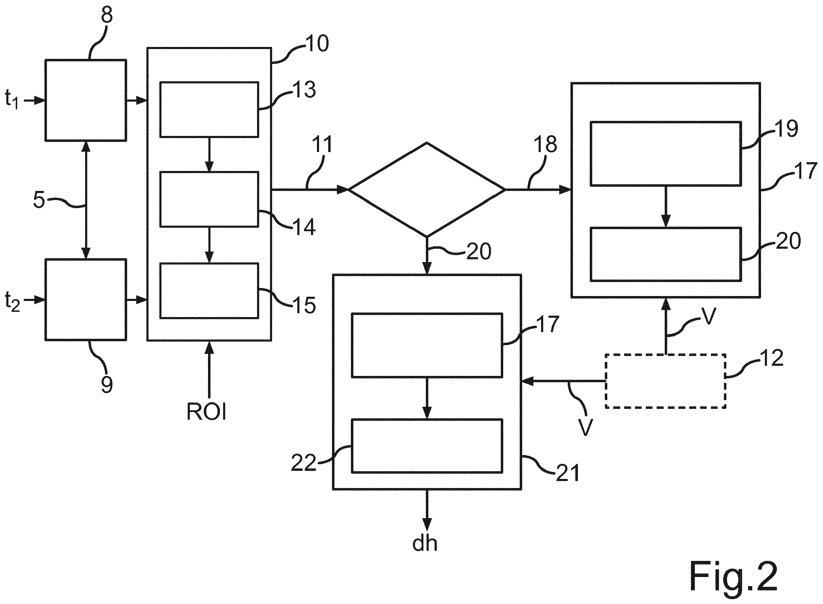

In the method for determining a mounting height dh (Fig. 2) of the camera 5 on the motor vehicle 1 relative to the road surface 7, on which the motor vehicle 1 is positioned, by means of the camera 5 a first image 8 (Fig. 2) of the road surface 7 is captured at a first point in time t1 and a second image 9 (Fig. 2) of the road surface 7 is captured at a second point in time t2 that is different from the first point in time t1.

It is envisaged that the first image 8 is compared with the second image 9 by means of an electronic computing device 10 and on the basis of the comparison a motion vector 11 (Fig. 2) for the camera 5 is determined by means of the electronic computing device 10 and by evaluating the determined motion vector 11 and a predetermined velocity V (Fig. 2) of the motor vehicle 1 the mounting height dh of the camera 5 is determined by means of the electronic computing device 10.

In the present embodiment it is in particular envisaged that the electronic computing device 10 is configured as part of the camera 5. It can further be envisaged that the electronic computing device 10 is configured separate from the camera 5. Further, it can be envisaged that the electronic computing device 10 is configured as part of the driver assistance system 6.

By comparison of the first image 8 with the second image 9 thus the motion vector 11 between the first image 8 and the second image 9 can be determined. In dependence on the predetermined velocity V, which for instance can be predetermined by a velocity device 12 of the motor vehicle 1, then in turn this motion vector 11 can be evaluated in dependence on the predetermined velocity V. Thereby a determination of the mounting height dh of the motor vehicle 1 is facilitated. Thereby the mounting height dh of the camera 5 on the motor vehicle 1 can be reliably determined.

The camera 5 can for instance be arranged on a tail portion of the motor vehicle 1 and can be used for determining a movement of the hooked-up trailer 2 on the motor vehicle 1. For instance by means of the camera 5 it can be envisaged that the inclination angle $\alpha$ or the coupling angle (jack knife) between the motor vehicle 1 and the hooked-up trailer 2 can be determined. In particular due to the fact that the accuracy of the determination of the inclination angle depends on the accuracy of the measurement of the camera 5, it is thus of decisive significance that the camera 5 reliably knows its own position, in order to be able to determine the inclination angle $\alpha$. For this purpose it is in particular envisaged that for instance a rotation angle of the camera 5 is already known. In particular for the camera 5 intrinsic and extrinsic parameters are known so that the first image 8 and the second image 9 can reliably be compared with each other.

Alternatively, the camera 5 can also be arranged in different places on the motor vehicle 1, for instance in a front portion or a lateral portion. In particular the camera 5 is arranged in such a way that the road surface 7 at least in portions can be captured by means of the camera 5. In particular it may be envisaged that the road surface 7 can be predetermined as planar road surface 7.

Preferably it may be envisaged that the predetermined velocity signal is generated and predetermined for instance by means of a global navigation system (Global Navigation Satellite System - GNSS). Hereby in particular in dependence on the current position by means of the navigation device a current velocity V can be determined and the electronic computing device 10 be provided for processing.

Further Fig. 1 shows that the camera 5 can be provided as fisheye camera and at least the first image 8 and the second image 9 can be captured as fisheye image.

By using the fisheye camera as camera 5 a large field of view (FOV) can be provided. Thus, by means of a single camera 5 large areas of the environment U of the motor vehicle 1 can be captured. In particular it is thereby facilitated that by means of the one single camera 5 for instance the road surface 7 and for instance the hooked-up trailer 2 on the motor vehicle 1 can be captured. Thereby it is facilitated by a single camera 5 to provide both information for a driver assistance system 6 and also the corresponding mounting height dh of the motor vehicle 1. Thus the motor vehicle 1 can be provided with a reduced number of components.

In particular when using fisheye cameras a distorted image taken of the environment U takes place. In particular vertical lines in this connection are represented distorted. In particular by a fisheye correction 13 (Fig. 2) these vertical lines can be distorted again so that a determination of the movement of the motor vehicle 1 within the two images 8, 9 can be performed in an improved way. Thereby an improved comparison between the first image 8 and the second image 9 is facilitated, whereby the motion vector 11 can be determined in a more precise way. This again leads to an improved determination of the mounting height dh of the camera 5 on the motor vehicle 1.

Fig. 2 shows a schematic block diagram of an embodiment of the method according to the invention. By the camera 5 in particular at the point in time t1 the first image 8 is provided and at the point in time t2 the second image 9. In particular in the electronic computing device 10 the movement vector 11 is generated. Herein it may be envisaged that temporally prior to the determining of the motion vector 11 the fisheye correction 13 of the first image 8 and the second image 9 for comparing the first image 8 and the second image 9 is performed.

Further, it may in particular be envisaged that for determining the motion vector 11 a plurality of motion subvectors are generated by comparing the first image 8 with the second image 9 and by evaluating 14 the plurality of motion subvectors, in particular by an averaging of the determined motion subvectors of the motion vector 11. In particular this can be performed by a so-called block matching.

Further, it may be envisaged that an expected value range for the plurality of the motion subvectors is predetermined, in which the motion subvectors in dependence on the predetermined velocity V or in dependence on a determined adjacent motion vector are expected by the electronic computing device 10, and a determined motion subvector, which lies outside the motion subvector range is left unconsidered when determining the motion vector 11. This method step is in particular performed by the outlier evaluation 15 within the electronic computing device 10.

In particular it is envisaged that the motion vector 11 is determined by comparison of a region of interest ROI in the first image 8 and the second image 9. In particular the region of interest ROI is represented as input parameter for the electronic computing device 10.

In particular in the first image 8 and in the second image 9 merely the road surface 7 can be found in a predetermined portion of the first image 8 and the second image 9. In particular by predetermining the region of interest ROI it is thus facilitated that not the entire first image 8 and the entire second image 9 are compared with each other, but merely the respective regions of interest ROI in the first image 8 and in the second image 9. Thereby it is for instance facilitated that computing capacity is saved since not the entire first image 8 is correspondingly compared with the entire second image 9, but merely the regions of interest.

Preferably it may be envisaged that within the region of interest ROI several predetermined pixels exist, which then again are compared with each other. Thus, it is facilitated that within the region of interest ROI further not every single pixel of the first image 8 is compared with the other pixel the second image 9, but merely predetermined pixels within the respective region of interest ROI. Thereby further computing capacity can be saved since merely a fraction of the overall pixel number of the first image 8 is compared with the second image 9. Thereby it is facilitated that the mounting height dh of the camera 5 can be determined whilst saving computing capacity.

Further preferably, a block evaluation can be performed within the regions of interest ROI. The respective region of interest ROI for this purpose can be subdivided into a plurality of blocks, wherein then again the blocks of the first image 8 can be compared with the blocks of the second image 9 in order to be able to determine the motion vector 11. Thereby further computing capacity can be saved since merely a fraction of the first image 8, namely the corresponding blocks, are compared with the blocks of the second image 9. Thereby it is facilitated that the mounting height dh of the camera 5 can be determined whilst saving computing capacity.

In a decision field 16 then by means of the electronic computing device 10 it can be decided whether a corresponding height model 17 is already present or not. If the height model 17 is not present, the height model 17 is generated via the arrow 18. For this purpose in block 19 the current velocity V and the motion vector 11, in particular the motion vector length, are accumulated with each other. Then a velocity and motion vector 11 Modelfit, i.e. a model adjustment, in block 20 takes place. As input signal for the height model 17 is to be regarded in particular the predetermined velocity V. The velocity V can for instance be transmitted by means of a velocity capture device 12 of the motor vehicle 1 to the electronic computing device 10. As velocity capture device 12 can act for instance a tachometer of the motor vehicle 1, wherein then the velocity signal can be transmitted as electrical signal to the electronic computing device 10.

Should the height model 17 already be present, via the arrow 20 it can be proceeded to a height determination 21. For this purpose the height model 17 is used for the height determination 21. In the block 22 then again an optimization takes place. In particular in the optimization 22 for instance a gradient method or a Levenberg-Marquardt optimization method can be used in order to determine the mounting height dh.

Further it can be envisaged that the mounting height dh of the camera 5 additionally is determined in dependence on the predetermined relative height h of the camera 5.

The relative height h of the camera 5 is in particular a probable predetermined mounting height of the camera 5. For instance as predetermined relative height h can be regarded the height of a tail sill, in which the camera 5 is positioned. On the basis of for instance different tire pressures and different loading states in turn the mounting height dh can differ from the relative height. In particular thus merely the difference between the predetermined relative height h and the actual mounting height dh can be established. This difference in turn can be accordingly also taken into consideration for use for the driver assistance system 6.

Further it may be envisaged that by means of a triangulation the mounting height dh of the camera 5 is determined in dependence on the predetermined relative height of the camera 5. In particular the triangulation can be performed by means of the formula:

$$dh = \left( \frac{mvLen_{hat}}{mvLen_{bma}} \right) - 1) * h$$

wherein mvLen_bma corresponds to the motion vector length, which is determined by the electronic computing device 10, and mvLen_hat corresponds to the expected motion vector length for the current velocity V, which is predetermined by the height model 17 and h to the predetermined relative height h. Thereby a simple determination of the mounting height dh of the camera 5 is facilitated.

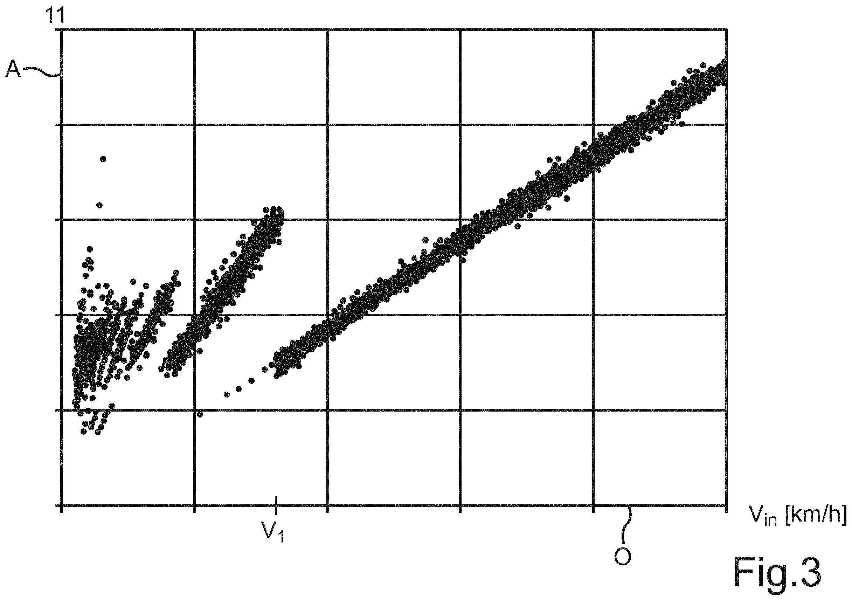

Fig. 3 in a schematic diagram shows a velocity motion vector diagram. On the ordinate O in particular the velocity V is indicated in kilometers per hour (km/h) and on the abscissa A in particular the length of the motion vector 11 is plotted. In particular Fig. 3 shows that a time difference t1-t2 between the capturing of the first image 8 and the second image 9 in dependence on the predetermined velocity V is determined.

In particular it may be envisaged that by means of the camera 5 30 images per second are taken and at a velocity V of the motor vehicle 1 of more than 18 kilometers per hour as V1 every second, in particular every third image 8, 9 of the 30 images are compared with each other and at a velocity V of the motor vehicle 1 of less than 18 kilometers per hour as V1 every fifth, in particular every sixth image 8, 9 of the 30 images are compared with each other. In particular it is thus facilitated that by means of a camera 5, which is already known from the motor vehicle series production and which can take in particular 30 images per second, the method can be performed. In the case of a number of 30 images per second about every 33,33 milliseconds an image 8, 9 is taken. If now the motor vehicle moves at more than 18 kilometers per hour, every second, in particular every third image of the 30 images is compared with each other. In particular thus in short intervals the respective motion vector 11 can be determined so that reliably and temporally highly precisely the mounting height dh of the camera 5 can be determined. In particular at velocities V of less than 18 kilometers per hour merely every fifth, in particular every sixth image, of the 30 images is compared with each other. In particular thus it can be realized that the motion vector 11 is determined over an extended time distance but by reliable motion determination, whereby the motion vector 11 can be reliably captured. Thus also at small velocities V the corresponding motion of the motor vehicle 1 and the corresponding motion vector 11 can be captured. This also at a low velocity V of the motor vehicle 1 leads to a reliable determination of the motion vector 11, whereby the mounting height dh of the camera 5 relative to the road surface 7 can be precisely and reliably determined.

**Claims**

1.  Method for determining a mounting height (dh) a camera (5) on a motor vehicle (1) relative to a road surface (7), on which the motor vehicle (1) is positioned, in which method by means of the camera (5) a first image (8) of the road surface (7) is captured at a first point in time (t1) and a second image (9) of the road surface (7) is captured at a second point in time (t2) that is different from the first point in time (t1), **characterized in that** the first image (8) is compared with the second image (9) by means of an electronic computing device (10) and on the basis of the comparison a motion vector (11) for the camera (5) is determined by means of the electronic computing device (10) and by evaluating the determined motion vector (11) and a predetermined velocity (V) of the motor vehicle (1) the mounting height (dh) of the camera (5) is determined by means of the electronic computing device (10).

2.  Method according to claim 1, **characterized in that** the velocity (V) is transmitted by means of a velocity capturing device (12) of the motor vehicle (1) to the electronic computing device (10).

3.  Method according to any one of the preceding claims, **characterized in that** a time difference (t1-t2) between the capturing of the first image (8) and the second image (9) is determined in dependence on the predetermined velocity (V).

4.  Method according to claim 3, **characterized in that** by means of the camera (5) 30 images per second are taken and in the case of a velocity (V) of the motor vehicle (1) of more than 18 km/h (V1) every second, in particular every third image (8, 9), of the 30 images can be compared with each other and in the case of a velocity (V) of the motor vehicle (1) of less than 18 km/h (V1) every fifth, in particular every sixth image (8, 9), of the 30 images are compared with each other.

5.  Method according to any one of the preceding claims, **characterized in that** the camera (5) is provided as fisheye camera and at least the first image (8) and the second image (9) are captured as fisheye image.

6.  Method according to claim 5, **characterized in that** temporally before the determining of the motion vector (11) a fisheye correction (13) of the first image (8) and the second image (9) for comparing the first image (8) and the second image (9) is performed.

7.  Method according to any one of the preceding claims, **characterized in that** for determining the motion vector (11) a plurality of motion subvectors by comparing the first image (8) with the second image (9) are generated and by evaluation (14) of the plurality of motion subvectors, in particular by averaging the determined motion subvectors, the motion vector (11) is determined.

8.  Method according to claim 7, **characterized in that**

an expected value range for the plurality of motion subvectors is predetermined, in which the motion subvectors in dependence on the predetermined velocity (V) or in dependence on a determined adjacent motion subvector of the electronic computing device (10) are expected, and a determined motion subvector, which lies outside the expected value range, is left unconsidered when determining the motion vector (11).

9. Method according to any one of the preceding claims,
**characterized in that**
the mounting height (dh) is determined by means of a gradient method or by means of a Levenberg-Marquardt optimization method of the electronic computing device (10).

10. Method according to any one of the preceding claims,
**characterized in that**
the mounting height (dh) of the camera (5) additionally is determined in dependence on a predetermined relative height (h) of the camera (5).

11. Method according to claim 10,
**characterized in that**
by means of a triangulation the mounting height (dh) of the camera (5) is determined in dependence on the predetermined relative height (h) of the camera (5).

12. Method according to any one of the preceding claims,
**characterized in that**
the motion vector (11) is determined by comparing a region of interest (ROI) in the first image (8) and in the second image (9).

13. Computer program product comprising program code means, which are stored in a computer-readable medium, in order to perform the method for determining the mounting height (dh) according to any one of the preceding claims 1 to 12, if the computer program product is executed on a processor of an electronic computing device (10).

14. Electronic computing device (10) comprising a computer program product, wherein the electronic computing device (10) is configured for performing a method according to any one of claims 1 to 12.

15. Camera (5) comprising an electronic computing device (10) according to claim 14.

Fig.1

Fig.2

Fig.3

Europäisches
Patentamt

European
Patent Office

Office européen
des brevets

# EUROPEAN SEARCH REPORT

**Application Number**

EP 18 20 8198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/157798 A1 (CONNAUGHT ELECTRONICS LTD [IE]) 21 September 2017 (2017-09-21) <br> * page 8, paragraphs 3,4 * <br> * page 1, paragraph 1 * <br> * page 4, lines 4-6 * <br> * page 3, paragraph 3 * <br> * page 4, paragraphs 2,4 * <br> * claims 12,13 * <br> * page 14, paragraph 3 * <br> * page 2, paragraph 4 * <br> * page 9, paragraphs 4,2 * <br> * page 13, paragraph 4 * <br> ----- | 1-6,9-15 | INV. <br> G06T7/73 <br> G06T7/223 |
| X | WO 2017/157799 A1 (CONNAUGHT ELECTRONICS LTD [IE]) 21 September 2017 (2017-09-21) | 1,2,5-7, 9-11, 13-15 | |
| Y | * page 6, paragraphs 2,3 * <br> * page 9, paragraphs 3,4 * <br> * page 2, paragraph 2 * <br> * claims 12,13 * <br> * page 10, paragraph 1 * <br> * page 12, paragraphs 1,12 * <br> * page 3, paragraph 1 * <br> * page 5, paragraph 4 * <br> ----- | 8 | |
| Y | DE 10 2016 104729 A1 (CONNAUGHT ELECTRONICS LTD [IE]) 21 September 2017 (2017-09-21) <br> * paragraph [0014] * <br> * claim 8 * <br> ----- | 8 | TECHNICAL FIELDS SEARCHED (IPC) <br><br> G06T |
| A | DE 10 2009 057996 A1 (DAIMLER AG [DE]) 19 May 2011 (2011-05-19) <br> * paragraph [0028] * <br> ----- | 10,11 | |

The present search report has been drawn up for all claims

| Place of search | Date of completion of the search | Examiner |
|---|---|---|
| Munich | 20 March 2019 | Winkler, Gregor |

EPO FORM 1503 03.82 (P04C01)

**EP 3 657 441 A1**

## ANNEX TO THE EUROPEAN SEARCH REPORT
## ON EUROPEAN PATENT APPLICATION NO.

EP 18 20 8198

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2019

| Patent document cited in search report | Publication date | Patent family member(s) | Publication date |
|---|---|---|---|
| WO 2017157798 A1 | 21-09-2017 | CN 109074653 A<br>DE 102016104730 A1<br>EP 3430593 A1<br>KR 20180112010 A<br>US 2019080476 A1<br>WO 2017157798 A1 | 21-12-2018<br>21-09-2017<br>23-01-2019<br>11-10-2018<br>14-03-2019<br>21-09-2017 |
| WO 2017157799 A1 | 21-09-2017 | CN 109155066 A<br>DE 102016104732 A1<br>EP 3430594 A1<br>KR 20180112014 A<br>WO 2017157799 A1 | 04-01-2019<br>21-09-2017<br>23-01-2019<br>11-10-2018<br>21-09-2017 |
| DE 102016104729 A1 | 21-09-2017 | NONE | |
| DE 102009057996 A1 | 19-05-2011 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160253566 A1